# EUROPÄISCHE PATENTSCHRIFT

(11) **EP 1 853 795 B1**
(45) Veröffentlichungstag und Bekanntmachung des Hinweises auf die Patenterteilung: **26.01.2011**
(21) Anmeldenummer: 06705902.2
(22) Anmeldetag: 04.02.2006
(51) Int. Cl.: F01D 5/16, F01D 5/34, F02C 7/045, F01D 5/00

(54) **Verfahren zum Bearbeiten eines integral beschaufelten Rotors**
Method for machining an integrally bladed rotor
Procédé d'usinage d'un rotor à aubage intégré

(30) Priorität: 12.02.2005 DE 102005006414
(43) Veröffentlichungstag der Anmeldung: 14.11.2007
(73) Patentinhaber: MTU Aero Engines GmbH, 80995 München (DE)
(72) Erfinder: SCHÖNENBORN, Harald, 85757 Karlsfeld (DE)
(86) Internationale Anmeldenummer: PCT/DE2006/000173
(87) Internationale Veröffentlichungsnummer: WO 2006/084438

(56) Entgegenhaltungen:
- US-A- 6 042 338
- PATENT ABSTRACTS OF JAPAN Bd. 003, Nr. 137 (M-080), 14. November 1979 (1979-11-14) -& JP 54 114619 A (TOSHIBA CORP), 6. September 1979 (1979-09-06)

## Beschreibung

Die Erfindung betrifft ein Verfahren zum Bearbeiten eines integral beschaufelten Rotors einer Strömungsmaschine, insbesondere eines integral beschaufelten Verdichterrotors einer Gasturbine.

Verdichterrotoren von Gasturbinen werden zunehmend als integral beschaufelte Rotoren ausgeführt, Integral beschaufelte Rotoren werden auch als Blisk (bladed disk) oder Blind (blade ring) bezeichnet, und zwar abhängig davon, ob ein scheibenförmiger Rotorgrundkörper oder ein ringförmiger Rotorgrundkörper vorliegt. Aufgrund von Fertigungsungenauigkeiten bei der Herstellung von integral beschaufelten Rotoren können die Laufschaufeln des integral beschaufelten Rotors eine von einer gewünschten Eigenfrequenz abweichende Eigenfrequenz aufweisen. Dies kann dazu führen, dass bei im Betrieb erzwungenen Schwingungen Schwingungsamplituden von einzelnen Laufschaufeln unzulässig groß werden, sodass im Betrieb der Strömungsmaschine bzw. Gasturbine die Gefahr von Beschädigungen besteht.

Das Einstellen der Eigenfrequenz von Laufschaufeln an Rotoren von Strömungsmaschinen durch Abtragen von Material an verschiedenen Stellen der Schaufeloberfläche ist aus dem Stand der Technik bekannt.

Das Dokument US 6 042 338A schützt beispielsweise einen Fan einer Gasturbine, an dessen Umfang Laufschaufeln mit abwechselnd höherer und niedrigerer Eigenfrequenz angeordnet sind. Der werkstoffabtrag erfolgt auf der Druck- bzw. Saugseite des jeweiligen Schaufelblatts, d. h. auf aerodynamisch kritischen Strömungsflächen. Daraus kann eine deutliche Verschlechterung der Leistung der Strömungsmaschine resultieren.

Hiervon ausgehend liegt der vorliegenden Erfindung das Problem zu Grunde, ein verfahren zum Bearbeiten eines integral beschaufelten Rotors einer Strömungsmaschine zu schaffen, welches ein Einstellen der Schaufeleigenfrequenz ohne Leistungseinbußen ermöglicht.

Dieses Problem wird durch ein Verfahren gemäß Patentanspruch 1 gelöst. Dabei umfasst das Verfahren zumindest die folgenden Schritte: a) Bereitstellen eines integral beschaufelten Rotors mit einem Rotorgrundkörper und mehreren integral am Rotorgrundkörper befestigten Laufschaufeln mit oder ohne Außendeckband; b) Ermitteln der Eigenfrequenz jeder Laufschaufel des integral beschaufelten Rotors; c) Bearbeiten mindestens einer Laufschaufel des integral beschaufelten Rotors durch Materialabtragen, um die Eigenfrequenz der jeweiligen Laufschaufel auf einen bestimmten Wert einzustellen. Erfindungsgemäß erfolgt das Abtragen am Übergangsradius vom Rotorgrundkörper zur Laufschaufel und/oder am Übergangsradius von der Laufschaufel zum Außendeckband.

Im Sinne der hier vorliegenden Erfindung wird ein Verfahren vorgeschlagen, mit dem eine gezielte Beeinflussung der Eigenfrequenz von Laufschaufeln an integral beschaufelten Rotoren ohne Beeinträchtigung der Aerodynamik möglich ist. Dadurch ist es möglich, die im Betrieb auf die Laufschaufeln und damit den integral beschaufelten Rotor wirkenden Belastungen zu reduzieren und die Beschädigungsgefahr desselben deutlich zu verringern.

Nach einer ersten vorteilhaften Weiterbildung der Erfindung wird die Eigenfrequenz der jeweiligen bearbeiteten Laufschaufel derart eingestellt, dass alle Laufschaufeln die gleiche Eigenfrequenz aufweisen.

Nach einer zweiten, alternativen vorteilhaften Weiterbildung der Erfindung wird die Eigenfrequenz der jeweiligen bearbeiteten Laufschaufel derart eingestellt, dass die Laufschaufel sich über den Umfang des Rotors periodisch ändernde Eigenfrequenzen aufweisen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen integral beschaufelten Verdichterrotor einer Gasturbine in schematisierter, perspektivischer Seitenansicht;
- Fig. 2: einen Ausschnitt aus dem integral beschaufelten Rotor der Fig. 1 in schematisierter Vorderansicht.

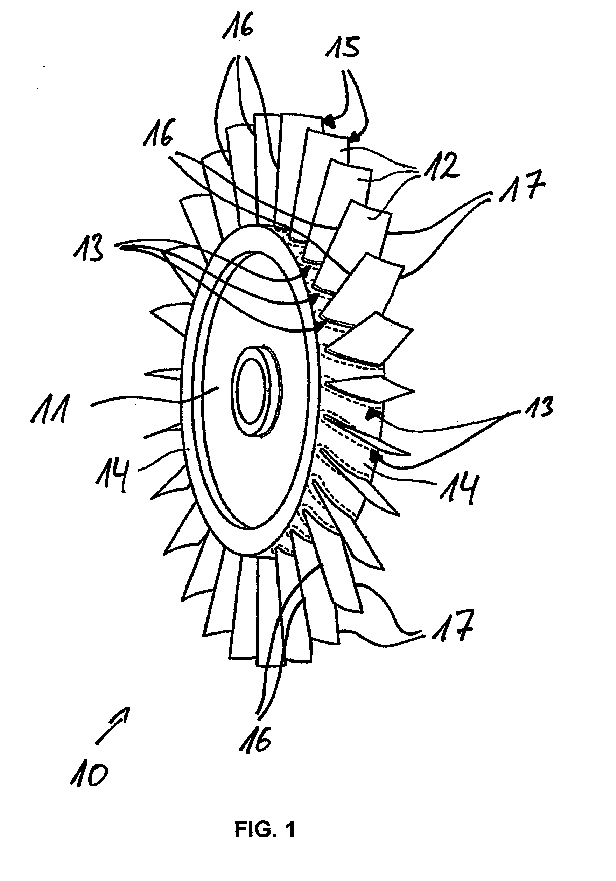

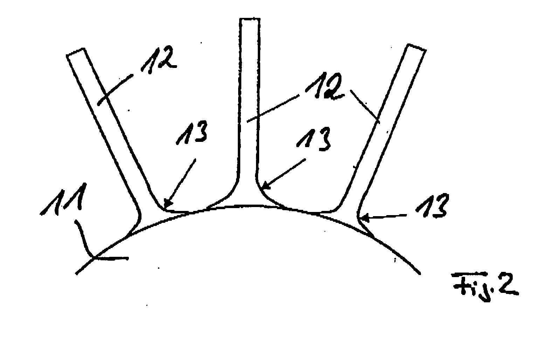

Nachfolgen wird die Erfindung unter Bezugnahme auf Fig. 1 und 2 in gröβerem Detail beschrieben.

Fig. 1 zeigt einen integral beschaufelten Gasturbinenrotor 10 mit einem scheibenförmigen Rotorgrundkörper 11 sowie mehreren integral am Rotorgrundköper 11 befestigten Laufschaufeln 12. Derartige integral beschaufelte Gasturbinenrotoren mit einem scheibenförmigen Rotorgrundkörper werden auch als Blisk bezeichnet und kommen bevorzugt im Verdichter einer Gasturbine zum Einsatz. Bei dem in Fig. 1 dargestellten, integral beschaufelten Gasturbinenrotor 10 handelt es sich um einen außendeckbandlosen Rotor. An einem radial innenliegenden Abschnitt 13 der Laufschaufeln 12 ist ein Übergangsbereich zwischen den Laufschaufeln 12 und eine Nabe 14 des Rotorgrundkörpers 11 ausgebildet. Radial außenliegende Abschnitte 15 der Laufschaufeln 12 sind bei einem außendeckbandlosen Gasturbinenrotor als freie Laufschaufelspitzen ausgeführt. Jede der Laufschaufeln 11 verfügt über eine Strömungseintrittskante 16 und eine Strömungsaustrittskante 17, wobei sich zwischen der Strömungseintrittskante 16 und der Strömungsaustrittskante 17 einer jeden Laufschaufel 12 einerseits eine Saugseite und andererseits Druckseite derselben erstreckt.

Die hier vorliegende Erfindung betrifft nun ein Verfahren zum Bearbeiten eines integral beschaufelten Rotors einer Strömungsmaschine, insbesondere des in Fig. 1 dargestellten integral beschaufelten, außendeckbandlosen Gasturbinenrotors 10. Im Sinne der hier vorliegenden Erfindung wird nach Bereitstellen eines solchen Gasturbinenrotors 10 die Eigenfrequenz jeder Laufschaufel 12 des integral beschaufelten Gasturbinenrotors 10 ermittelt, wobei diese Ermittlung entweder messtechnisch oder analytisch durchgeführt wird. Nach Ermitteln der Eigenfrequenz jeder Laufschaufel 12 des integral beschaufelten Gasturbinenrotors 10 wird mindestens eine der Laufschaufeln 12 durch Materialabtragen bearbeitet, um die Eigenfrequenz der jeweiligen Laufschaufel 12 auf einen bestimmten Wert einzustellen. Das Materialabtragen an der jeweiligen Laufschaufel 12 erfolgt im Bereich des radial innenliegenden Abschnitts 13 und/oder im Bereich des radial außenliegenden Abschnitts 15 und/oder im Bereich der Strömungseintrittskante 16 und/oder im Bereich der Strömungsaustrittskante 17 der jeweiligen Laufschaufel.

Im Fall des in Fig. 1 dargestellten, außendeckbandlosen Gasturbinenrotors 10 erfolgt das Einstellen der Eigenfrequenz der jeweiligen Laufschaufel 12 des integral beschaufelten Gasturbinenrotors 10 durch Materialabtragen im Bereich des radial innenliegenden Übergangsabschnitts 13 zwischen dem Rotorgrundkörper 11 und der jeweiligen Laufschaufel 12.

Dabei wird ein Übergangsradius in diesem Übergangsabschnitt 13 durch Materialabtragen zumindest abschnittsweise verkleinert. Die Übergangsradien einer jeden Laufschaufel 12 können dabei entlang des Schaufelumfangs variieren. Fig. 2 verdeutlich schematisiert die radial innenliegenden Übergangsabschnitte 13 zwischen dem Rötorgrundkörper 11 und den Laufschaufeln 12, wobei durch Materialabtrag der Übergangsradius einer jeden Laufschaufel 12 zum Rotorgrundkörper 11 individuell sowie über den Schaufelumfang variierend eingestellt werden kann.

Wird im Unterschied zum gezeigten Ausführungsbeispiel als integral beschaufelter Rotor ein Rotor mit Außendeckband bereitgestellt, so wird die jeweilige Laufschaufel des integral beschaufelten Rotors zur Einstellung deren Eigenfrequenz durch Materialabtragen im Bereich eines radial innenliegenden Übergangsabschnitts zwischen dem Rotorgrundkörper und der jeweiligen Laufschaufel und/oder im Bereich eines radial außenliegenden Übergangsabschnitts zwischen dem Außendeckband und der jeweiligen Laufschaufel bearbeitet. Das Bearbeiten im Bereich des radial außenliegenden Übergangsabschnitts zwischen dem Außendeckband und der Laufschaufel erfolgt dabei auf analoge Art und weise wie das Bearbeiten im Bereich des radial innenliegenden Übergangsabschnitts zwischen dem Rotorgrundkörper und der Laufschaufeln, nämlich dadurch, dass ein Übergangsradius in diesen Übergangsabschnitten durch Materialabtrag zumindest abschnittsweise verkleinert wird. Diesbezüglich kann auf die Ausführungen zu Fig. 2 verwiesen werden.

Im Sinne der hier vorliegenden Erfindung kann die Eigenfrequenz der jeweils zu bearbeitenden Laufschaufeln 12 derart eingestellt werden, dass alle Laufschaufeln 12 des Gasturbinenrotors 10 die gleiche Eigenfrequenz aufweisen. Alternativ kann mit dem erfindungsgemäßen Verfahren die Eigenfrequenz der jeweils zu bearbeitenden Laufschaufeln 12 derart eingestellt werden, dass die Laufschaufeln 12 über den Umfang des Gasturbinenrotors 10 sich periodisch ändernde Eigenfrequenzen aufweisen. Im ersten Fall kann von einem gezielten Tuning der Eigenfrequenzen und im zweiten Fall von einem gezielten Mistuning der Eigenfrequenzen gesprochen werden.

Im Sinne der hier vorliegenden Erfindung werden demnach für alle Laufschaufeln eines integral beschaufelten Rotors Eigenfrequenzen ermittelt. Auf Basis der ermittelten Eigenfrequenzen wird untersucht, ob die ermittelte Eigenfrequenz der Laufschaufeln von einer jeweiligen Solleigenfrequenz abweicht. Ist dies der Fall, so wird zur gezielten Einstellung der Eigenfrequenz der jeweiligen Laufschaufel dieselbe durch Materialabtragen bearbeitet.

## Patentansprüche

1. Verfahren zum Bearbeiten eines integral beschaufelten Rotors (10) einer Strömungsmaschine, wobei der Rotor (10) außendeckbandlos oder mit Außendeckband ausgeführt ist, insbesondere eines integral beschaufelten Verdichterrotors einer Gasturbine, mit folgenden Schritten:
a) Bereitstellen eines integral beschaufelten Rotors (10) mit einem Rotorgrundkörper (11) und mehreren integral am Rotorgrundkörper (11) befestigten Laufschaufeln (12);
b) Ermitteln der Eigenfrequenz jeder Laufschaufel (12) des integral beschaufelten Rotors (10);
c) Bearbeiten mindestens einer Laufschaufel (12) des integral beschaufelten Rotors (10) durch Materialabtragen, um die Eigenfrequenz der jeweiligen Laufschaufeln (12) auf einen bestimmten Wert einzustellen,
**dadurch gekennzeichnet,**
**dass** im Bereich eines radial innenliegenden Übergangsabschnitts (13) zwischen Rotorgrundkörper (11) und Laufschaufel (12) ein Übergangsradius durch Materialabtrag zumindest abschnittsweise verkleinert wird, und/oder dass im Bereich eines radial außenliegenden Übergangsabschnitts zwischen Außendeckband und Laufschaufeln (12) ein Übergangsradius durch Materialabtrag zumindest abschnittsweise verkleinert wird.

2. Verfahren nach Anspruch 1,
**dadurch gekennzeichnet,**
**dass** die Eigenfrequenzen der Laufschaufeln (12) des integral beschaufelten Rotors (10) messtechnisch ermittelt werden.

3. Verfahren nach Anspruch 1,
**dadurch gekennzeichnet,**
**dass** die Eigenfrequenzen der Laufschaufeln (12) des integral beschaufelten Rotors (10) analytisch ermittelt werden.

4. Verfahren nach einem der Ansprüche 1 bis 3,
**dadurch gekennzeichnet,**
**dass** die Eigenfrequenz der jeweiligen bearbeiteten Laufschaufeln (12) derart eingestellt wird, dass alle Laufschaufeln (12) die gleiche Eigenfrequenz aufweisen.

5. Verfahren nach einem der Ansprüche 1 bis 3,
**dadurch gekennzeichnet,**
**dass** die Eigenfrequenz der jeweiligen bearbeiteten Laufschaufel (12) derart eingestellt wird, dass die Laufschaufeln (12) sich über den Umfang des Rotors (10) periodisch ändernde Eigenfrequenzen aufweisen.

## Claims

1. Method for machining an integrally bladed rotor (10) of a fluid-flow machine, wherein the rotor (10) is constructed without an outer shroud band or with an outer shroud band, in particular an integrally bladed compressor rotor of a gas turbine, having the following steps:
a) provision of an integrally bladed rotor (10) that has a rotor base body (11) and a plurality of rotor blades (12) that are secured integrally on the rotor base body (11);
b) determination of the natural frequency of each rotor blade (12) of the integrally bladed rotor (10);
c) machining of at least one rotor blade (12) of the integrally bladed rotor (10) by means of removal of material in order to adjust the natural frequency of the respective rotor blade (12) to a certain value,
**characterised in that**
in the region of a radially internal transition section (13) between the rotor base body (11) and the rotor blade (12) a transition radius is diminished at least in sections by means of removal of material, and/or **in that** in the region of a radially external transition section between the outer shroud band and the rotor blade (12) a transition radius is diminished at least in sections by means of removal of material.

2. Method according to claim 1,
**characterised in that**
the natural frequencies of the rotor blades (12) of the integrally bladed rotor (10) are determined by means of measuring techniques.

3. Method according to claim 1,
**characterised in that**
the natural frequencies of the rotor blades (12) of the integrally bladed rotor (10) are determined analytically.

4. Method according to one of claims 1 to 3,
**characterised in that**
the natural frequency of the respective machined rotor blade (12) is adjusted in such a way that all the rotor blades (12) have the same natural frequency.

5. Method according to one of claims 1 to 3,
**characterised in that**
the natural frequency of the respective machined rotor blade (12) is adjusted in such a way that the rotor blades (12) have natural frequencies that change periodically over the circumference of the rotor (10).

## Revendications

1. Procédé d'usinage d'un rotor à aubage intégré (10) d'une turbomachine, le rotor (10) étant réalisé avec ou sans anneau de renforcement extérieur, en particulier d'un rotor de compresseur à aubage intégré d'une turbine à gaz, avec les étapes suivantes :
a) mise à disposition d'un rotor à aubage intégré (10) avec un corps de base de rotor (11) et plusieurs aubes mobiles (12) fixées intégralement sur le corps de base de rotor (11) ;
b) détermination de la fréquence propre de chaque aube mobile (12) du rotor à aubage intégré (10) ;
c) usinage d'au moins une aube mobile (12) du rotor à aubage intégré (10) par enlèvement de matière afin de régler la fréquence propre de l'aube mobile respective (12) à une valeur déterminée,
**caractérisé en ce que** dans la zone d'une section de jonction radialement intérieure (13) entre le corps de base de rotor (11) et l'aube mobile (12), un rayon de jonction est réduit au moins par endroits par enlèvement de matière et/ou **en ce que** dans la zone d'une section de jonction radialement extérieure entre l'anneau de renforcement extérieur et l'aube mobile (12), un rayon de jonction est réduit au moins par endroits par enlèvement de matière.

2. Procédé selon la revendication 1, **caractérisé en ce que** les fréquences propres des aubes mobiles (12) du rotor à aubage intégré (10) sont déterminées par mesure.

3. Procédé selon la revendication 1, **caractérisé en ce que** les fréquences propres des aubes mobiles (12) du rotor à aubage intégré (10) sont déterminées de manière analytique.

4. Procédé selon l'une quelconque des revendications 1 à 3, **caractérisé en ce que** la fréquence propre de l'aube mobile respectivement usinée (12) est réglée de telle manière que toutes les aubes mobiles (12) présentent la même fréquence propre.

5. Procédé selon l'une quelconque des revendications 1 à 3, **caractérisé en ce que** la fréquence propre de l'aube mobile respectivement usinée (12) est réglée de telle manière que les aubes mobiles (12) présentent des fréquences propres se modifiant périodiquement sur la périphérie du rotor (10).
